(19) Europäisches Patentamt
European Patent Office
Office européen des brevets

(11) **EP 4 020 415 A1**

(12) **EUROPÄISCHE PATENTANMELDUNG**

(43) Veröffentlichungstag:
**29.06.2022   Patentblatt 2022/26**

(21) Anmeldenummer: **20217325.8**

(22) Anmeldetag: **27.12.2020**

(51) Internationale Patentklassifikation (IPC):
**G07G 1/00** *(2006.01)*      **G07G 1/14** *(2006.01)*
**G06Q 20/20** *(2012.01)*      **G06Q 20/18** *(2012.01)*
**G01G 19/414** *(2006.01)*      **A47F 3/00** *(2006.01)*
**A47F 9/04** *(2006.01)*

(52) Gemeinsame Patentklassifikation (CPC):
**G07G 1/0081; G01G 19/4144; G06Q 20/18;
G06Q 20/208; G07G 1/0072; G07G 1/14;**
A47F 9/048

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Bizerba SE & Co. KG
72336 Balingen (DE)**

(72) Erfinder:
• **TUDOR, Andronic
9548 Matzingen (CH)**
• **MEIK, Huber
78570 Mühlheim (CH)**

(74) Vertreter: **Huber, Meik
Bizerba SE & Co. KG
PF 18/1
Wilhelm-Kraut-Straße 65
72336 Balingen (DE)**

(54) **SELF-CHECKOUT STORE**

(57)      Die vorliegende Erfindung betrifft ein Verfahren zum Betrieb einer Verkaufsvorrichtung für Waren, insbesondere Einzelhandelswaren und eine Verkaufsvorrichtung zum Selbst-Checkout von Waren, insbesondere Einzelhandelswaren.

Fig. 1

**Beschreibung**

Die vorliegende Erfindung betrifft ein Verfahren zum Betrieb einer Verkaufsvorrichtung für Waren, insbesondere Einzelhandelswaren und eine Verkaufsvorrichtung zum Selbst-Checkout von Waren, insbesondere Einzelhandelswaren.

Eine Vorrichtung zum bedienerlosen Verkauf, insbesondere zur bedienerlosen Abrechnung in Supermärkten, ist dem Fachmann zum Beispiel aus der EP1717772A1 bekannt. Diese bietet ein System, bei dem der Kunde im Supermarkt wie gewohnt Produkte in einen Einkaufswagen verbringt. Der Kunde scannt beim Gang durch den Supermarkt jedes Produkt, das er in den Einkaufswagen legt. An der Kasse wird die Information über die gescannten Produkte vom Scanner an ein Abrechnungsterminal übertragen. Der Kunde kann dann seinen Einkauf bezahlen. Um den Kunden auf Fehler beim Scanvorgang hinweisen zu können, sind an der Kasse verschiedene Verifikationsverfahren vorgesehen, z. B. basierend auf optischen Verfahren oder auf Gewichtserkennungsverfahren. Bei diesem Verfahren müssen Teile der Aufgaben des Bedienpersonals, nämlich das manuelle Einscannen jedes einzelnen Artikels, vom Kunden ausgeführt werden. Dies ist für den Kunden ungewohnt und unkomfortabel. Außerdem ist dieses Verfahren fehleranfällig, da der Kunde jeden einzelnen Artikel scannen muss, vor er ihn in den Einkaufswagen legt. Im Falle von Abweichungen zwischen den Artikeln im Einkaufswagen und den gescannten Artikeln muss dies an der Kasse korrigiert werden. Dafür ist Verkaufspersonal notwendig. Dieses System ist nicht als bedienerloses System im 24 Stunden Betrieb einsetzbar.

Ebenfallens sind dem Fachmann Regalsysteme mit integrierter Bestandsüberwachung, wie in der EP3620760B1 gezeigt, bekannt. Eine bisher unveröffentlichte Europäische Patentanmeldung EP19220148.1 des Anmelders zeigt eine weitere Variante eines Regalsystems mit integrierter Bestandsüberwachung. Auf einer Auflagefläche werden Waren einem Kunden zur Entnahme angeboten. Über eine Gewichtsermittlung wird bestimmt, von welcher Stelle eine Ware von der Auslagefläche entnommen wurde. Eine Bestandsüberwachung wird mit der Information über die entnommenen Waren fortlaufend aktualisiert.

Aufgabe der Erfindung ist es, ein für den Kunden einfacheres und weniger fehleranfälliges Verfahren zum Betrieb einer Verkaufsvorrichtung für Waren und eine zugehörige Verkaufsvorrichtung zum Selbst-Checkout zur Verfügung zu stellen.

Diese Aufgabe wird durch ein Verfahren zum Betrieb einer Verkaufsvorrichtung für Waren nach Anspruch 1 und eine Verkaufsvorrichtung zum Selbst-Checkout von Waren in einem Ladengeschäft nach Anspruch 14 gelöst.

Erfindungsgemäß wird ein Verfahren zum Betrieb einer Verkaufsvorrichtung für Waren vorgeschlagen. Dabei handelt es sich insbesondere um Einzelhandelswaren. Das Verfahren umfasst die Schritte:

- Detektieren eines entnommenen Artikels und Bestimmung von dessen Artikeldaten. Dieser Schritt wird von einem Regal mit automatischer Entnahmeüberwachung ausgeführt. Automatische Entnahmeüberwachung meint in diesem Zusammenhang, dass das Regal derart ausgestaltet ist, dass die Entnahme eines Artikels detektiert werden kann. Entnahmeüberwachung in diesem Zusammenhang ist nicht so zu verstehen, dass das Regal oder ein mit dem Regal verbundenes Warenwirtschaftssystem notwendigerweise den aktuellen Warenbestand in dem Regal kennen oder errechnen muss. In einer Ausführungsform handelt es sich um ein Regal mit integrierter Bestandsüberwachung, dessen Funktionalität zur Warendetektion für die Bestandsüberwachung gleichzeitig als Entnahmeüberwachung für das Verfahren zum Betrieb der Verkaufsvorrichtung genutzt wird. In einer Ausführungsform erfolgt das Detektieren eines entnommenen Artikels mit einer Kamera oder mit einem optischen Sensor. In einer Ausführungsform erfolgt das Detektieren eines entnommenen Artikels mit Hilfe von Gewichtssensoren.
- Auslesen einer Kundenidentifikationsnummer eines Kunden in der Nähe des Regals, aus dem ein Artikel entnommen wird. In einer Ausführungsform wird die Kundenidentifikationsnummer mit einem Näherungssensor am Regal ausgelesen. In einer Ausführungsform erkennt der Näherungssensor einen Sender, der in die Nähe des Regals kommt und der an einem Einkaufswagen oder Einkaufskorb angebracht ist. Vom Sender wird die Kundenidentifikationsnummer ausgelesen. Die Kundenidentifikationsnummer ist in diesem Fall eine eindeutige Nummer des Einkaufswagens oder des Einkaufskorbs. Für diesen Fall dient die Nummer des Einkaufswagens oder des Einkaufskorbes als Pseudonym für den Kunden und somit als Kundenidentifikationsnummer. In einer Ausführungsform erkennt der Näherungssensor einen Sender, der in die Nähe des Regals kommt und der in einen Produktscanner integriert ist. Ein Produktscanner ist in einer Ausführungsform ein Smartphone mit einer App zum Einscannen der Artikel. Die Erfindung verfolgt in einer Ausführungsform die Aufgabe, das Einscannen der Artikel obsolet zu machen. In einer Ausführungsform muss der Kunden nach dem Verfahren der Erfindung die Artikel jedoch mit einem Produktscanner während des Einkaufs einscannen. Das Verfahren nach der Erfindung dient dann der prozesssicheren Verifikation der eingescannten Artikel und insbesondere dem Auffinden von Artikeln, die beim Einscannen vergessen oder absichtlich ausgelassen wurden. In dieser Ausführungsform dient der Produktscanner als Sender für die Kundenidentifikationsnummer. Die Kundenidentifikationsnummer ist in diesem Fall eine eindeutige Nummer des Produktscanners. Für diesen Fall dient die Nummer des Produktscanners als Pseudonym für den Kunden und somit als Kundenidentifikationsnummer.
- Empfangen der Artikeldaten des entnommenen Artikels und der Kundenidentifikationsnummer. Diese Artikeldaten und die Kundenidentifikationsnummer werden von einer Steuervorrichtung empfangen.

- Hinzufügen der Artikeldaten des entnommenen Artikels und die dazugehörige Kundenidentifikationsnummer zu einer Liste von zur Bezahlung vorgesehenen Artikel. Dieser Schritt wird mit der Steuervorrichtung ausgeführt. Die Liste von zur Bezahlung vorgesehener Artikel umfasst Artikel, die aus den Regalen bereits entnommen wurden, die jedoch noch nicht bezahlt wurden. Diese Liste wird fortlaufend durch die Steuervorrichtung aktualisiert.
- Detektieren von Artikeln, für die ein Bezahlvorgang ausgeführt werden soll. Dieser Schritt wird mit einer Detektionsvorrichtung ausgeführt. Die Detektionsvorrichtung umfasst mindestens einen Sensor und eine Auswerteeinrichtung. Zur Detektion der Artikel werden der Auswerteeinrichtung mindestens Daten des Sensors und die Liste der zur Bezahlung vorgesehenen Artikel als Eingangsgrößen zur Verfügung gestellt.

Der Ausdruck Auslesen einer Kundenidentifikationsnummer ist in diesem Zusammenhang so zu verstehen, dass ein Lesegerät im Näherungssensor zum Beispiel einen Speicher, der am Einkaufswagen oder Einkaufskorb befestigt ist, ausliest. In diesem Zusammenhang ist Auslesen einer Kundenidentifikationsnummer ebenfalls so zu verstehen, dass der Näherungssensor eine Anfrage an einen Sender am Einkaufswagen oder Einkaufskorb schickt und dann eine Antwort des Senders mit der Kundenidentifikationsnummer enthält.

Der Fachmann versteht, dass die Detektionsvorrichtung nicht notwendigerweise ein einzelnes Modul oder Bauteil ist. So können Teile der Detektionsvorrichtung zum Beispiel in einer Verkaufsvorrichtung untergebracht sein und andere Teile der Detektionsvorrichtung können zum Beispiel in einem Netzwerk oder einer Computing Cloud untergebracht sein. Die Detektionsvorrichtung ist vielmehr als zusammenwirkendes System zu verstehen, das aus mehreren einzelnen und gegebenenfalls verteilt angeordneten Teilen besteht.

Bei Erkennungsverfahren in Self-Checkout Vorrichtungen werden oft Kameras benutzt, um Artikel in einem Einkaufswagen oder Einkaufskorb zu erkennen. In einem kleinen oder mittleren Ladengeschäft kann das Sortiment mehrere hundert bis hin zu wenigen tausend Artikel, in größeren Ladengeschäften oder Supermärkten mehrere zehntausend Artikel umfassen. Diese Artikel sind in der Verkaufsvorrichtung hinterlegt und müssen mit dem Detektionsverfahren erkannt werden. Besonders wenn Artikel zum Beispiel in einem Einkaufswagen aufeinander liegen und sich teilweise verdecken, so dass optische Sensoren die Artikel nur teilweise erkennen, kommt es zu Fehlern bei der Detektion der Artikel. Das erfindungsgemäße Verfahren hat den Vorteil, dass ein Artikel erkannt und einer Kundenidentifikationsnummer zugewiesen wird, wenn er aus dem Regal genommen wird. Die Annahme, dass dieser Artikel Teil des jeweiligen Einkaufs ist, den ein Kunde, dem die entsprechende Kundenidentifikationsnummer zugewiesen wurde, bezahlten möchte, ist mit sehr großer Wahrscheinlichkeit richtig. Ausnahmen sind möglicherweise Fälle, bei deinen zwei Kunden gleichzeitig am Regal stehen und zwei verschiedene Artikel entnehmen. In diesem Fall ist nicht klar, welcher Artikel zu welcher Kundenidentifikationsnummer gehört. Ebenfalls gehören zu dieser Ausnahme Fälle, in denen ein Kunden seinen Einkaufswagen etwas abseits stehen lässt und einen Artikel aus einem Regal holt. Das betrifft bei einem normalen Einkauf eine geringe Anzahl von Artikel. In dem Erkennungsverfahren an der Selbst-Checkout Verkaufsvorrichtung, das auf Sensordaten beruht, sind deswegen aufgrund der Artikel, die mit einer Kundenidentifikationsnummer versehen sind, schon eine Vielzahl von Artikeln im Einkaufswagen oder Einkaufskorb bekannt. Bei den unbekannten Artikeln handelt es sich um eine geringe Zahl, die ebenfalls auf der Liste der zur Bezahlung vorgesehenen Artikel stehen, jedoch nicht mit einer Kundenidentifikationsnummer gekennzeichnet sind. Da das Objekterkennungsverfahren im Vergleich zum Stand der Technik dadurch deutlich weniger Unbekannte aufweist, ist die Erkennung der Artikel prozesssicherer und zuverlässiger.

In einer Ausführungsform erkennt das Verfahren zum Detektieren von Artikeln, für die ein Bezahlvorgang ausgeführt werden soll, nur Artikel, die zur Liste der zur Bezahlung vorgesehenen Artikel gehören.

In einer Ausführungsform werden, in einem Fall, in dem mehrere Einkaufswagen, Einkaufskörbe oder Produktscanner durch den Näherungssensor ausgelesen werden, mehrere Kundenidentifikationsnummern mit dem entnommenen Artikel verknüpft und an die Steuervorrichtung gesendet. Die Steuervorrichtung speichert mindestens zwei, insbesondere alle Kundenidentifikationsnummern mit den Artikeldaten in der Liste der zur Bezahlung vorgesehen Artikel. So können Fälle, in denen mehrere Kunden am Regal stehen und etwas entnehmen, abgedeckt werden. Obwohl die Zuordnung der Kunden zu einem Artikel dann nicht eindeutig ist, da dem Artikel mehrere Kunden zugewiesen werden, ist dies eine Information, die das Detektieren der Artikel erleichtert.

In einer Ausführungsform ist der mindestens eine Sensor der Detektionsvorrichtung mindestens eine Kamera. Insbesondere handelt es sich dabei um mindestens eine CCD Kamera. In einer Ausführungsform sind die Daten des mindestens einen Sensors Bilddaten. In einer Ausführungsform ist der mindestens eine Sensor eine Wägezelle. In einer Ausführungsform sind die Daten des mindestens einen Sensors Gewichtsdaten.

In einer Ausführungsform umfasst der Schritt des Detektierens von Artikeln, für die ein Bezahlvorgang ausgeführt werden soll, den Schritt:

- Anwenden eines Verfahrens zur Objekterkennung in der Auswerteeinrichtung. Das Verfahren zur Objekterkennung erkennt in den Daten des mindestens einen Sensors objektbeschreibende Attribute. Diese objektbeschreibenden Attribute werden mit objektbeschreibenden Attributen von Artikeln vergleichen, die in der Liste der zur Bezahlung vorgesehenen Artikel sind. Das hat den Vorteil, dass das Verfahren zur Objekterkennung als mögliche Lösungen nur Lösungen zulässt, das heißt nur Artikel detektieren kann, die aus einem Regal genommen wurden. Diese Artikel müssen folglich noch bezahlt werden. Artikel, die nicht aus dem Regal genommen wurden, sind zwar noch im Ladengeschäft im Sortiment vorhanden, aber aktuell soll es für diese Artikel keinen Bezahlvorgang geben. Deswegen können diese Artikel von dem Verfahren zur Objekterkennung in den Daten des Sensors auch nicht erkannt werden. In einer Ausführungsform ist das Verfahren zur Objekterkennung ein optisches Verfahren und wird auf Bilddaten eines Einkaufskorbes oder eines Einkaufswagens angewendet. Das optische Verfahren basiert in einer Ausführungsform auf Kantenerkennung, Transformationen, Größen und/oder Farberkennung.

In einer Ausführungsform erfasst der Näherungssensor die Zeitdauer, die ein Einkaufswagen, Einkaufskorb oder Produktscanner in der Nähe des Näherungssensor verbringt. In einer Ausführungsform erfasst der Näherungssensor die Distanz, die ein Einkaufswagen, Einkaufskorb oder Produktscanner zum Näherungssensor hat. In einer Ausführungsform bestimmt das Verfahren zur Objekterkennung die Wahrscheinlichkeit für einen Artikel in einem Einkaufswagen oder Einkaufskorb in Abhängigkeit der Distanz des Senders zum Näherungssensors. In einer Ausführungsform bestimmt das Verfahren zur Objekterkennung die Wahrscheinlichkeit für einen Artikel in einem Einkaufswagen oder Einkaufskorb in Abhängigkeit der Dauer, während der der Sender in der Nähe des Näherungssensors war.

Diese Distanz wird ebenfalls an die Steuervorrichtung gesendet und in der Liste der zur Bezahlung vorgesehenen Artikel abgelegt. Optional wird diese Zeitdauer ebenfalls an die Steuervorrichtung gesendet und in der Liste der zur Bezahlung vorgesehenen Artikel abgelegt. Bei der Detektion der Artikel im Einkaufswagen oder im Einkaufskorb geht die Dauer des Aufenthalts vor dem Regal als Parameter mit ein. In einer Ausführungsform wird eine Mindestzeitdauer angenommen, die ein Einkaufswagen, Einkaufskorb oder Produktscanner in der Nähe des Regals sein muss, dass der Kunde genügend Zeit hat, um einen Artikel zu entnehmen. Ist der Kunde kürzer vor dem Regal, wird angenommen, dass der Kunde lediglich an dem Regal vorbeigefahren ist und keinen Artikel entnommen hat, also kein Artikel mit der entsprechenden Kundenidentifikationsnummer versehen wird. Dann ist es wahrscheinlich, dass ein anderer Kunde, der sich in der Nähe des Regals aufgehalten hat, einen Artikel entnommen hat.

In einer Ausführungsform führt mindestens ein Regal mit automatischer Entnahmeüberwachung zum Detektieren des entnommenen Artikels folgende Schritte ausführt:

- Empfangen eines Signals von mindestens zwei, vorzugsweise drei oder vier Wägezellen, die in den Ecken eines starren Körpers, der einen Auslagebereich mit mindestens zwei Produktbereichen bildet, angeordnet sind. Das heißt, der Auslagebereich eines Regals ist auf mehreren Wägezellen abgestützt. Die Wägezellen ermitteln die Gewichtskraft des Auslagebereichs und der Artikel, die auf dem Auslagebereich stehen. Die Signale der Wägezellen entsprechen den Gewichtskräften im Bereich der Ecken des starren Körpers.
- Ermitteln von Schwerpunktkoordinaten und einer Gesamtgewichtskraft aus den empfangenen Signalen. Diese werden mit einer Auswerteeinheit aus den Signalen der Wägezellen ermittelt.
- Empfangen eines Signals, das einer neuen Gewichtskraft entspricht, von mindestens einer Wägezelle und ermitteln mit der Auswerteeinheit neuer Schwerpunktkoordinaten aus den von den Wägezellen aktuell empfangenen Daten.
- Ermitteln eines Produktbereichs und eines Gewichts der aus dem Produktbereich entnommenen Artikel.
- Bestimmen der Artikeldaten des aus dem Regal entnommenen Artikels aufgrund des ermittelten Produktbereichs und bestimmen der Anzahl der entnommenen Artikel aufgrund des dem Produktbereichs entnommenen Gewichts und des spezifischen Gewichts des Artikels.

In einer Ausführungsform wird der Auslagebereich durch einen Regalfachboden gebildet, zum Beispiel durch ein Regalbrett oder ein Gitterboden eines Regalfachs.

Mit den Schwerpunktkoordinaten kann der Bereich auf einem starren Körper ermittelt werden, von dem ein Gegenstand entnommen wurde. Bei Regalen ist es oft der Fall, dass ein starres Regalbrett von einem Gestell getragen wird. Auf dem Regalbrett sind mehrere Fächer für verschiedene Artikel vorgesehen. Mit Hilfe von mehreren Wägezellen, die vorzugsweise an den Ecken des starren Körpers angebracht sind, kann über die Ermittlung der Schwerpunktkoordinaten der Bereich auf dem starren Körper und somit der Produktbereich und somit auch ein zugeordneter Artikel ermittelt werden. Mit Hilfe des Gesamtgewichts der entnommenen Artikel lässt sich die Anzahl der aus dem Produktbereich entnommenen Artikel festgesellen.

In einer Ausführungsform ermittelt die Auswerteeinheit bei einer Änderung des Gesamtgewichts einen Vektor zwischen den vorhergehenden Schwerpunktkoordinaten und den neuen Schwerpunktkoordinaten. Der von einer Steuereinrichtung bestimmte Regalbereich wird aus dem Vektor und dem Gesamtgewicht von der Steuereinrichtung ermittelt.

In einer Ausführungsform tariert die Auswerteeinheit alle Wägevorrichtungen periodisch und gleichzeitig. Die aus den Daten der Wägevorrichtungen gebildeten Schwerpunktskoordinaten bilden den Schwerpunkt ab, an dem etwas aus dem Regalfachboden entnommen oder zugefügt wurde. In einer Ausführungsform bildet die Auswerteeinheit zur Ermittlung der neuen Schwerpunktskoordinaten für jede Wägevorrichtung die Differenz aus einem neuen Gewichtswert und einem vorhergehenden Gewichtswert. Das heißt, bei einer Entnahme eines Produkts aus dem Regalfachboden wird die Gewichtsänderung an jeder Wägevorrichtung separat ermittelt. Aus den vier Differenzwerten, das heißt, aus der Gewichtsänderung an jeder Wägevorrichtung, werden die neuen Schwerpunktskoordinaten ermittelt. Beide Ausführungsformen führen dazu, dass die gemessenen Gewichtswerte der vier Wägevorrichtungen separat betrachtet werden und nicht ein Vektor berechnet wird, der skaliert werden muss. Somit sind diese beiden Ausführungsformen weniger sensitiv gegenüber Toleranzen bei der Gewichtswertbestimmung durch die Wägevorrichtungen.

In einer Ausführungsform ist ein Verfahren zur Objekterkennung ein Verfahren, das einen gemessenen Gewichtswert mit dem Einzelgewicht der Artikel auf der Liste der zur Bezahlung vorgesehenen Artikel vergleicht. In einer Ausführungsform werden optische Verfahren und gewichtswertbasierte Verfahren bei dem Verfahren zur Objekterkennung kombiniert. Werden über eine Kamera mehrere Objekte erkannt und deren Erkennung auf der Grundlage der Liste der zur Bezahlung vorgesehenen Artikel ermittelt, so geht als weiterer Parameter das Gesamtgewicht dieser Artikel ein. Das Verfahren zur Objekterkennung summiert die Einzelgewichte der erkannten Artikel aus der Liste mit den zur Bezahlungen vorgesehenen Artikel und überprüft diese Summe anhand des gemessenen Gesamtgewichts.

In einer Ausführungsform umfasst das Verfahren folgende Schritte:

- Ermitteln eines Gesamtpreises für einen Bezahlvorgang aus der Summe aller Einzelpreise für die detektierten Artikel, für die ein Bezahlvorgang ausgeführt werden soll, und
- Ausführen eines Bezahlvorgang über ein Mobile Payment Verfahren, eine EC-Karte oder Kreditkarte oder über eine Barzahl-Vorgang.

Erfindungsgemäß wird eine Verkaufsvorrichtung zum Selbst-Checkout von Waren in einem Ladengeschäft, insbesondere in einem Supermarkt vorgeschlagen. Das Ladengeschäft umfasst mindestens ein Regal mit automatischer Entnahmeüberwachung und ein Netzwerk zum Austausch von Daten. Das mindestens eine Regal umfasst ferner einen Näherungssensor, der zum Erkennen eines Senders in der Nähe des Regals geeignet ist. Ein Sender ist insbesondere an einem Einkaufswagen oder Einkaufskorb angebracht oder in einen Produktscanner integriert. Die Verkaufsvorrichtung umfasst eine Steuervorrichtung zur Steuerung der Verkaufsvorrichtung und eine Kommunikationseinheit zum Empfangen von Daten aus dem Netzwerk sowie eine Datenbank zum Speichern von Artikeldaten und zu den Artikeln dazugehörigen objektbeschreibenden Attributen. Die Steuervorrichtung ist ausgelegt, über das Netzwerk von dem mindestens einen Regal mit automatischer Entnahmeüberwachung Artikeldaten von entnommenen Artikeln zu empfangen. Des Weiteren ist die Steuervorrichtung ausgelegt, über das Netzwerk zu den Artikeldaten zugehörige, durch den Näherungssensor ausgelesene Kundenidentifikationsnummern und vorzugsweise zugehörige Entfernung zu empfangen. Die Steuervorrichtung ist ausgelegt, daraus eine Liste der zu bezahlenden Artikel zu ermitteln. Die Verkaufsvorrichtung umfasst eine Detektionsvorrichtung mit mindestens einem Sensor und einer Auswerteeinrichtung. Die Detektionsvorrichtung bestimmt mit der Auswerteeinrichtung auf Grundlage der Daten des Sensors und der Liste der zur Bezahlung vorgesehenen Artikel, für welche Artikel ein Bezahlvorgang ausgeführt werden soll.

In einer Ausführungsform ist das Zusammenwirken von Näherungssensor und Sender über ein Trackiging System im Ladengeschäft realisiert. Die Näherungssensoren an den Regalen in der vorangegangen Ausführungsform haben den Zweck zu detektieren, wann ein Einkaufswagen, Einkaufskorb oder Produktscanner sich in der Nähe des Regals aufhält. Durch ein Tracking System kann die gleiche Aufgabe gelöst werden. Die Position jedes Einkaufswagens, Einkaufskorbs oder Produktscanners im Laden wird verfolgt und bei Kenntnis der Standorte der Regale, ist die Kundenidentifikationsnummer in der Nähe eines Regals ebenso ermittelbar.

In einer Ausführungsform erkennt die Auswerteeinrichtung aus den Daten des mindestens einen Sensors objektbeschreibende Attribute. Diese objektbeschreibenden Attribute werden mit objektbeschreibenden Attributen von Artikeln verglichen, die in der Liste der zur Bezahlung vorgesehenen Artikel aufgeführt sind.

In einer Ausführungsform ist die Verkaufsvorrichtung ein Teil eines Verbundes von mehreren Verkaufsvorrichtungen in dem Ladengeschäft. Die Datenbank ist eine gemeinsame Datenbank für alle Verkaufsvorrichtungen des Verbundes von mehreren Verkaufsvorrichtungen. Die Verkaufsvorrichtungen sind über ein Netzwerk mit der Datenbank verbunden.

In einer Ausführungsform befinden sich zumindest Teile der Detektionsvorrichtung, der Steuervorrichtung, der Auswerteeinrichtung und/oder der Datenbank außerhalb des Ladengeschäfts, insbesondere auf einem Server oder in einem Cloud-Netzwerk. Die Verkaufsvorrichtung greift über ein Netzwerk auf diese Teile der Detektionsvorrichtung, der Steuervorrichtung, der Auswerteeinrichtung und/oder der Datenbank zu.

In einer Ausführungsform umfasst das Verfahren zum Betrieb der Verkaufsvorrichtung den Schritt:

- Zurücksetzten, zu einem Zeitpunkt, insbesondere bei Öffnung des Ladengeschäfts am Morgen der Liste mit den zur Bezahlung vorgesehen Artikeln.

Das heißt, zu diesem Zeitpunkt werden alle Artikel, die zur Bezahlung vorgesehen sind, aber noch nicht bezahlt wurden, aus der Liste gelöscht. Dies kann zum Beispiel kurz vor Öffnung des Ladengeschäfts am Morgen sein. Andererseits kann zum Beispiel ein Mitarbeiter diesen Zeitpunkt manuell auswählen und die Liste manuell löschen, wenn er sieht, dass sich keine Kunden im Ladengeschäft aufhalten. Zu dem Zeitpunkt, an dem zum Beispiel kein Kunde im Ladengeschäft ist, dürfen auch keine Artikel auf der Liste der zur Bezahlung vorgesehen Artikel vermerkt sein. Sind dennoch Artikel auf der Liste, so ist beim Verkaufsvorgang ein Fehler passiert. Entweder wurden die Artikel beim Bezahlvorgang nicht korrekt abgerechnet, der Kunde hat ein Artikel aus dem Regal genommen und ihn an einer anderen Stelle im Ladengeschäft abgelegt oder die Entnahme des Artikels aus dem Regal mit automatischer Entnahmeüberwachung ist falsch detektiert worden. Das Löschen der Liste gleicht einem Reset des Systems, so dass sich die fehlerhaften Einträge nicht auf Dauer in der Liste ansammeln und die Performance des Systems beeinträchtigen. Die Information, wieviel Artikel auf der Liste der zur Bezahlung vorgesehenen Artikel gelöscht werden müssen, gibt auch wieder, wie viele Artikel zum Beispiel durch Diebstahl unerlaubt entwendet wurden.

In einer Ausführungsform umfasst das Verfahren zum Betrieb einer Verkaufsvorrichtung den Schritt:

- verifizieren, mit der Auswerteeinrichtung, ob die detektierten Artikel mit den Daten der Sensoren, insbesondere die Daten von mindestens einem optischen Sensor und von mindestens einem Gewichtssensor übereinstimmen und/oder die Wahrscheinlichkeit eines korrekten Detektierens der Artikel einen Schwellwert überschreitet, und
- falls die Wahrscheinlichkeit des korrekten Detektierens den Schwellwert nicht überschreitet und/oder die keine Übereinstimmung der Daten erkannt wird, vorschlagen mindestens eines Artikels aus der Liste der zur Bezahlung vorgesehen Artikel auf einer Eingabevorrichtung der Verkaufsvorrichtung zur manuellen Auswahl durch einen Kunden.

Einige Ausführungsformen der Erfindung sind in den Zeichnungen beispielhaft gezeigt und nachfolgend beschrieben. Es zeigen, jeweils in schematischer Darstellung:

Fig. 1      ein System zum Selbst-Checkout in einem Ladengeschäft,

Fig. 2      eine Verkaufsvorrichtung in eine ersten Ausführungsform,

Fig. 3      eine Verkaufsvorrichtung in einer zweiten Ausführungsform,

Fig. 4      eine Regalkonsole mit zwei Wägevorrichtungen,

Fig. 5      ein Blockdiagramm eines Regals,

Fig. 6      ein Verfahren zum Betrieb eines Regals,

Fig. 7      ein erstes Verfahren zur Bestimmung eines Ortes auf dem Regalfachboden, an dem ein Produkt entnommen oder zugefügt wurde,

Fig. 8      ein zweites Verfahren zur Bestimmung eines Ortes auf dem Regalfachboden, an dem ein Produkt entnommen oder zugefügt wurde,

Fig. 9      ein drittes Verfahren zur Bestimmung eines Ortes auf dem Regalfachboden, an dem ein Produkt entnommen oder zugefügt wurde, und

Fig. 10     ein Verfahren zum Selbst-Checkout in einem Ladengeschäft.

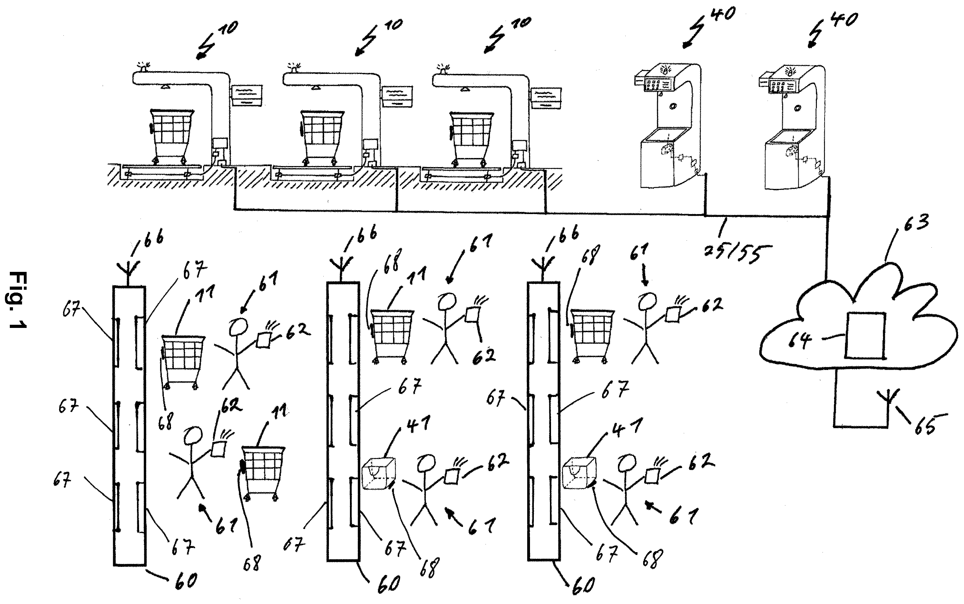

Fig. 1 zeigt ein System zum Selbst-Checkout in einem Ladengeschäft. Im Ladengeschäft sind eine Vielzahl von Kunden 61 vorhanden, die beim Selbst-Checkout an den Verkaufsvorrichtungen 10, 40 selbst zu Bedienern werden. Die Kunden 61 gehen mit einem Einkaufswagen 11 oder einem Einkaufskorb 41 an die Regale 60, um entsprechende Produkte zu entnehmen und sie in ihren Einkaufswagen 11 oder Einkaufskorb 41 zu legen. Die Regale 60 weisen einen oder mehrere Näherungssensoren 67 auf, die die Anwesenheit eines Senders 68 in der Nähe der Näherungssensoren 67 detektieren. Die Sender 68 weisen eine eindeutigen Kundenidentifikationsnummer auf, die die Näherungssensoren 67 drahtlos auslesen. Das heißt, die Sender übertragen die Kundenidentifikationsnummern drahtlos an die Näherungssensoren 67. Die Sender 68 sind an einem Einkaufswagen 11 oder Einkaufskorb 41 angebracht. Detektiert ein Regal 60 die Entnahme eines Artikels, so wird über den Näherungssensor 67 ebenfalls die Anwesenheit eines Senders 68 detektiert. Die eindeutige Kundenidentifikationsnummer des Senders 68 wird im Regal 60 zusammen mit den Artikeldaten über ein Netzwerk 65, 66 an eine Steuervorrichtung 64 geschickt. Es ist nicht zwingend vorgesehen, dass der Kunde 61 selbst mit einem Produktscanner 62 die Artikel einscannt. In einer Ausführungsform jedoch dient das erfinderische Verfahren ausschließlich zur Validierung der Einkäufe des Kunden 61 und der Kunde 61 ist selbst verpflichtet, jeden Artikel, den er aus einem Regal 60 nimmt, mit einem Produktscanner 62 einzuscannen, bevor er ihn in den Einkaufswagen 11 oder Einkaufskorb 41 legt. In einer Ausführungsform ist der Produktscanner 62 ein Smartphone, auf dem eine entsprechende App läuft. Das Smartphone, das als Produktscanner 62 genutzt wird, ist mit verschiedenen Technologien ausgestattet, die mit dem Näherungssensor 67 kommunizieren können, so zum Beispiel Bluetooth. In dieser Ausführungsform ist kein separater Sender 68 am Einkaufswagen 11 oder Einkaufskorb 41 vorgesehen. Vielmehr dient der Produktscanner 62 als Sender, von dem der Näherungssensor 67 die Kundenidentifikationsnummer ausliest.

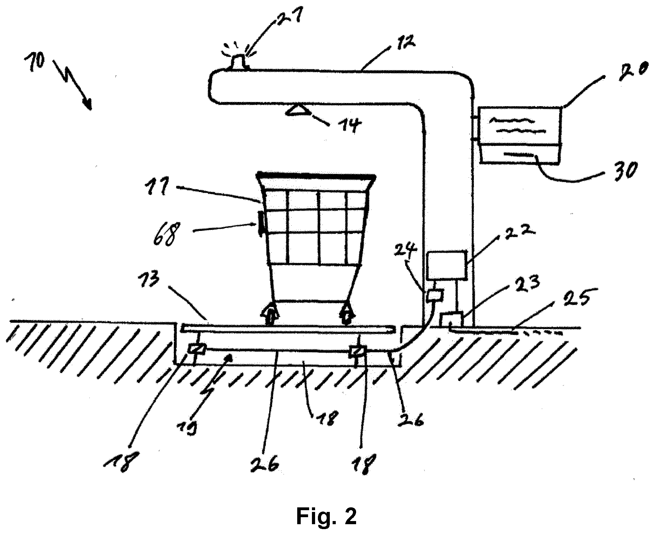

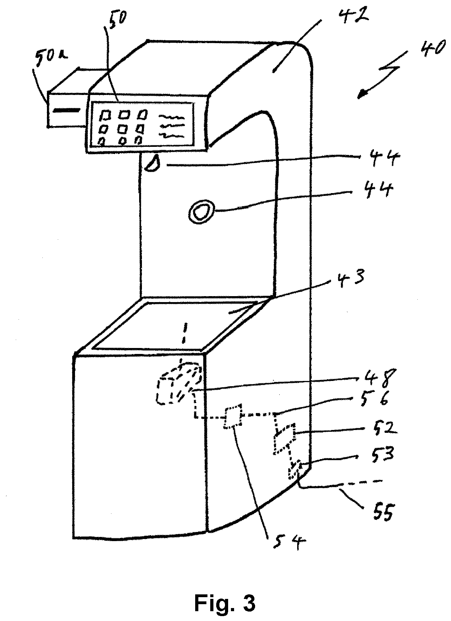

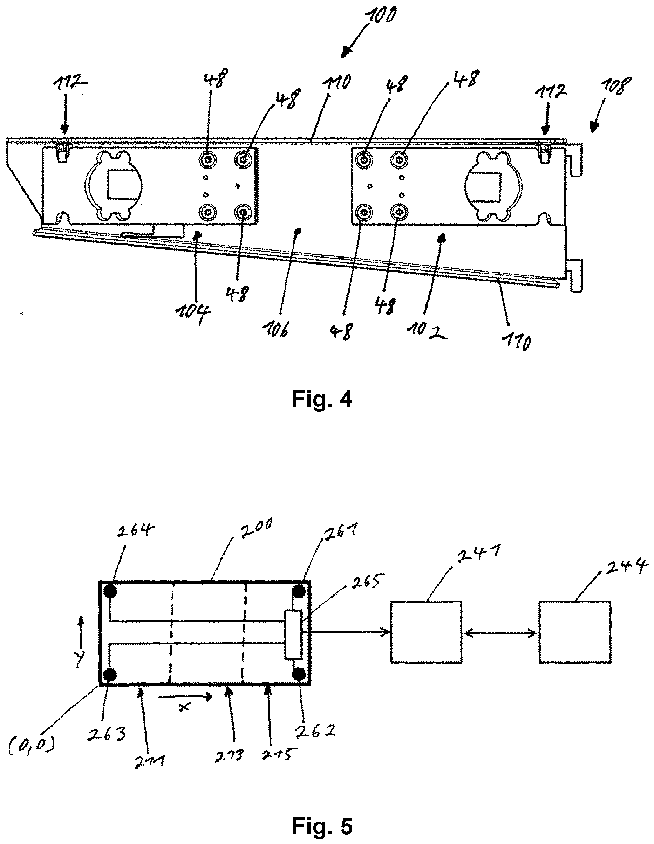

Das Ladengeschäft umfasst eine oder mehrere Verkaufsvorrichtungen 10, die für einen Selbst-Checkout mit einem Einkaufswagen 11 geeignet sind und im Detail in Fig. 2 gezeigt sind. Das Ladengeschäft umfasst alternativ oder zusätzlich eine oder mehrere Verkaufsvorrichtungen 40, die für den Selbst-Checkout mit einem Einkaufskorb 41 geeignet sind und die im Detail in Fig. 3 gezeigt sind. Die Verkaufsvorrichtungen 10, 40 sind über ein Netzwerk 25, 55 mit einer Computing Cloud 63 verbunden. Die Computing Cloud 63 umfasst eine Steuervorrichtung 64, die von den Verkaufsvorrichtung 10, 40 über das Netzwerk 25, 55 Bilder und Gewichtswerte von einem Einkaufswagen 11 oder einem Einkaufskorb 41 und eine Kundenidentifikationsnummer übermittelt bekommt. Die Regale 60 sind mit einer automatischen Entnahmeüberwachung ausgerüstet, deren Funktion mit Bezug zu den Zeichnungen Fig. 4 bis Fig. 9 detailliert beschrieben ist. Entnimmt ein Kunde ein Produkt aus dem Regal, so übermittelt das Regal mit einer Kommunikationsvorrichtung 66 die Artikeldaten und die Anzahl der entnommenen Artikel an die Computing Cloud 63. Ebenfalls übermittelt das Regal mit der Kommunikationsvorrichtung 66 die zugehörige Kundenidentifikationsnummer. Die Kommunikation findet zum Beispiel über ein drahtloses Netzwerk 65 (wie in Fig. 1 angedeutet), insbesondere ein öffentliches Mobilfunknetz oder ein WLAN des Ladengeschäfts oder ein (in Fig. 1 nicht gezeigtes) drahtgebundenes Netzwerk, insbesondere ein LAN, statt. In einer Ausführungsform umfasst das Computing Cloud 63 eine Steuervorrichtung 64. In einer Ausführungsform ist das Netzwerk 63 eine Computing Cloud, das heißt ein Cloud Netzwerk, in der die Funktion der Steuervorrichtung 64 realisiert ist. In einer Ausführungsform ist anstelle der Computing Cloud 63 ein Netzwerk vorgesehen, das ausschließlich zur Datenübertragung vorgesehen ist und die Steuervorrichtung ist in einer oder in allen der Verkaufsvorrichtungen 10, 40 vorgesehen. In einer Ausführungsform ist die Steuervorrichtung 64 ein Server in einem Netzwerk 25, 55, 62, 63, 65, 66, wobei das Netzwerk 25, 55, 62, 63, 65, 66 Server 64, Regale 60 und Verkaufsvorrichtungen 10, 40 verbindet.

Fig. 2 zeigt eine Verkaufsvorrichtung 10 in einer ersten Ausführungsform. Die Verkaufsvorrichtung 10 umfasst ein Gestell 12 unter das ein Einkaufswagen 11 geschoben werden kann. Der Einkaufswagen 11 hat eine definierte Position (Ruheposition) unter dem Gestell 12 auf einer Auflageplatte 13. Die Auflageplatte 13 ist eine Lastplatte einer Waage und mit der Krafteinleitungsseite einer oder mehrerer Wägezellen 18 mechanisch verbunden. Die Waage bestimmt das Gesamtgewicht des Einkaufswagens 11 mit seinem Inhalt. Das Gestell 12 umfasst weiter mindestens eine Kamera 14, die zum Erstellen von mindestens einem Bild einer Ansicht einer offenen Seite des Einkaufswagens 11 ausgebildet ist. Bei einem Einkaufswagen 11 ist normalerweise die obere Seite offen. Eine offene Seite im Sinne dieser Offenbarung ist jedoch auch zum Beispiel ein Seitenteil des Einkaufswagens, dass aus transparentem Material besteht. Im Rahmen der Erfindung soll als offene Seite ebenfalls gelten, wenn der Einkaufswagen aus einem grobmaschigen Metallgitter besteht, durch das hindurch eine Bildaufnahme des Inhalts des Einkaufswagens gemacht werden kann. Nicht als offene Seite ist im Rahmen dieser Offenbarung zu verstehen, wenn die Seite eines Einkaufswagens aus nicht transparentem Kunststoff besteht oder durch eine nicht transparente Werbetafel verdeckt ist. Die Verkaufsvorrichtung 10 umfasst ferner einen Empfänger (nicht gezeigt) zum Auslesen der Kundenidentifikationsnummer aus dem Sender 68 des Einkaufswagens 11 oder aus dem Produktscanner 62.

Die mindestens eine Wägezelle 18, insbesondere vier Wägezellen 18, ist mit einer Gewichtswertverarbeitungsvorrichtung 24 verbunden, die aus den Signalen der Wägezelle 18 oder der Wägezellen 18 einen Gewichtswert des Einkaufswagens 11 ermittelt. Die Gewichtswertverarbeitungsvorrichtung 24 umfasst einen Gewichtswertspeicher zum Speichern des Gewichtswertes. Die mindestens eine Kamera 14 und die Gewichtswertverarbeitungsvorrichtung 24 sind mit einer Steuerung 22 verbunden und übergeben die ermittelten Daten an die Steuerung 22. Die Steuerung 22 ist mit einer Kommunikationsvorrichtung 23 verbunden, über die die Steuerung 22 Daten wie Bilder und Gewicht und Kundenidentifikationsnummer an ein Netzwerk 25 übermittelt und mindestens einen Verkaufspreis und eine Auflistung der Artikel im Einkaufswagen 11 vom Netzwerk 25 empfängt. Die Verkaufsvorrichtung umfasst eine Ein-/Ausgabeeinheit 20, mit der ein Bediener mit der Verkaufsvorrichtung 10 interagieren kann. Die Ein-/Ausgabeeinheit 20 umfasst ebenfalls eine Bezahleinheit 30, an der vorzugsweise bargeldlos bezahlt werden kann. Die Ein-/Ausgabeeinheit 20 zeigt die vom Netzwerk 25 empfangen Daten, insbesondere die Artikel im Einkaufswagen 11 und deren Preis an und leitet den Bediener durch einen Bezahlvorgang mit der Bezahleinheit 30. Nach der Bezahlung der Artikel gibt die Ein-/Ausgabeeinheit 20 dem Bediener einen entsprechenden Hinweis aus, dass er das Ladengeschäft mit seinen Einkäufen verlassen kann. Optional umfasst die Ein-/Ausgabeeinheit 20 einen Drucker, um dem Bediener einen Bon über den abgeschlossenen Kauf auszudrucken. Nachdem der Bediener die Artikel im Einkaufswaagen 11 bezahlt hat, sendet die Steuerung 22 über das Netzwerk eine Nachricht, dass diese Artikel bezahlt wurden. Diese Nachricht wird in der sich im Netzwerk 63 befindlichen Steuervorrichtung 64 dazu benutzt, um die bezahlten Artikel von der Liste der zur Bezahlung vorgesehenen Artikel zu streichen, wie Folgend noch detaillierter erläutert wird.

Fig. 3 zeigt eine Verkaufsvorrichtung 40 in einer zweiten Ausführungsform. Diese Ausführung ist geeignet, um den Inhalt eines Einkaufskorbes 41 zu detektieren und abzurechnen. Ein Gestell 42 ist derart ausgebildet, dass es eine Auflage für den Einkaufskorb 41 bildet, die sich nicht auf dem Boden, sondern auf einer für den Bediener ergonomischen Höhe befindet. Das Gestell 42 umfasst einen oberen Teil, der über den abgestellten Einkaufskorb 41 ragt. Im Gestell ist eine Auflageplatte 43 ausgebildet, auf der der Einkaufskorb 41 mit seiner Unterseite abgestellt werden kann. Das Gestell 42 haltert mindestens eine Kamera 44, die derart positioniert ist, dass sie von einer offenen Seite des Einkaufskorbes 41 ein Bild des Inhalts des Einkaufskorb 41 machen kann. Die Verkaufsvorrichtung 40 umfasst ferner einen Empfänger (nicht gezeigt) zum Auslesen der Kundenidentifikationsnummer aus dem Sender 68 des Einkaufskorbs 41 oder aus dem Produktscanner 62.

Die Verkaufsvorrichtung 40 umfasst eine Waage. Eine Auflageplatte 43 bildet die Lastplatte der Waage und ist mechanisch mit der Krafteinleitungsseite einer im Gestell 42 untergebrachten Wägezelle 48 verbunden. Die Wägezelle 48 ist mit einer Gewichtswertverarbeitungsvorrichtung 54 verbunden, die aus den Signalen der Wägezelle 48 einen Gewichtswert des Einkaufskorbes 41 ermittelt und in einem Gewichtswertspeicher speichert. Auch in dieser Ausführungsform kann die Auflageplatte 43 von mehreren Wägezellen 48 gehalten sein. Da ein Einkaufskorb 41 nicht so schwer und nicht so groß ist wie ein Einkaufswagen 11 und die Auflageplatte 43 dementsprechend kleiner ausgestaltet ist als in der ersten Ausführungsform, ist eine Wägezelle 48 zur Gewichtsbestimmung in einer bevorzugten Ausführungsform ausreichend. Die Gewichtswertverarbeitungsvorrichtung 54 gibt denn Gewichtswert an eine Steuerung 52 weiter, die ihrerseits mit einer Kommunikationsvorrichtung 53 verbunden ist. Die Steuerung 52 steuert die Abläufe in der Verkaufsvorrichtung 40. Die Kommunikationsvorrichtung 53 ist mit einem Netzwerk 55 verbunden. Die von der Steuerung 52 vorgegebenen Abläufe und die durch die Kommunikationsvorrichtung 53 über das Netzwerk 55 übermittelten Daten sind analog zum ersten Ausführungsbeispiel. Der obere Teil des Gestells 42 umfasst eine Ein-/Ausgabeeinheit 50. Die Ein-/Ausgabeeinheit 50 kann in den Rahmen des Gestells 42 integriert sein und ist zum Beispiel ein Touchscreen. An dem Gestell ist eine Bezahleinheit 50a angebracht. Die Bezahleinheit 50a kann auch in die Ein-/Ausgabeeinheit 50 integriert sein. Die Bezahleinheit 50a dient dem bargeldlosen Bezahlen an der Verkaufsvorrichtung 40.

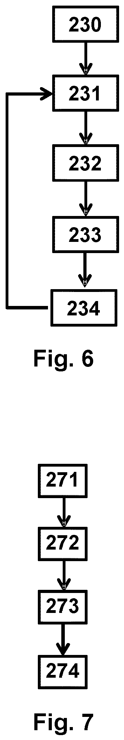

Fig. 4 zeigt eine Regalkonsole 100 in einer Seitenansicht auf die Innenseite. Die Regalkonsole 100 besteht aus einem sich in horizontaler Richtung erstreckenden Ausleger 106, der aus einem vertikal angeordneten Blech gebildet ist. Um die Stabilität zu erhöhen, weist der Ausleger 106 an seiner Oberseite und an seiner Unterseite eine Versteifungsrippe 110 auf. Die Versteifungsrippe ist realisiert durch eine Biegung des Blechs um 90°. Die Regalkonsole 100 umfasst an einem axialen Ende des Auslegers 106 eine Verankerungsvorrichtung 108 in der Form von zwei Haken, mit der die Regalkonsole in einer Regalschiene befestigt werden kann. Regalschienen sind oft als vertikal angebrachte Schienen mit übereinander angeordneten Schlitzen ausgebildet, so dass die Regalkonsolen auf verschiedenen Höhen an der Regalschiene befestigt werden können. Zwei Regalkonsolen 100, die an zwei beabstandeten Regalschienen auf gleicher Höhe angebracht sind, tragen einen Regalfachboden und bilden so ein Regalfach. Der Ausleger 106 ist dreieckförmig ausgebildet, das heißt, im Bereich der Verankerungsvorrichtung 108 ist die Höhe des Auslegers größer als am gegenüberliegenden axialen Ende, das dem vorderen Bereich des Regalfachs entspricht. Der Ausleger umfasst ferner zwei Wägevorrichtungen 102, 104, wobei eine Wägevorrichtung 102 im Bereich der Verankerungsvorrichtung 108 und eine Wägevorrichtung 104 im Bereich des anderen axialen Endes des Auslegers 106 angebracht ist. Die Wägevorrichtungen 102, 104 sind mit Schrauben 48 am Ausleger 106 befestigt. Jede Wägevorrichtung 102, 104 umfasst einen Krafteinleitungsabschnitt 112 mit einem Aufnahmeelement, das eine Aufnahme aufweist. In die Aufnahme kann eine Strebe eines Regalfachbodens eingebracht werden, so dass die Krafteinleitungsabschnitte der Wägevorrichtungen 102, 104 über dessen Streben den Regalfachboden stützen und halten. Dabei ist das Aufnahmeelement von oben frei zugänglich, so dass der Regalfachboden ausschließlich über die Krafteinleitungsabschnitte 112 der Wägevorrichtungen 102, 104 gestützt wird. Jeder Wägevorrichtung 102, 104 ist eine Leiterplatte zugeordnet, mit darauf angeordneter Elektronik, insbesondere eines Analog-Digital-Wandlers zur Verarbeitung wenigstens eines Ausgangssignals eines Dehnungsmessstreifens der Wägevorrichtungen 102, 104. Das Gewicht des Regalfachbodens sowie der Artikel, die auf dem Regalfachboden abgestellt sind, wird mit den Wägevorrichtungen 102, 104 gemessen. Aus den Gewichtswerten und insbesondere der Veränderung der Gewichtswerte der vier Wägevorrichtungen 102, 104 wird, wie in der Beschreibung mit Bezug zu Fig. 6 gezeigt, berechnet, an welcher Stelle auf dem Regalfachboden ein Artikel entnommen wird. So kann der entnommene Artikel identifiziert werden. Dies entspricht einer Entnahmeüberwachung des Regals.

In Fig. 4 ist eine Regalkonsole 100 gezeigt, die von vorne betrachtet die linke Regalkonsole eines Regalfachs bildet. Ebenso muss ein Regalfach eine rechte Regalkonsole umfassen, so dass der Regalfachboden auf der linken Seite von der linken Regalkonsole und auf der rechten Seite von der rechten Regalkonsole getragen wird. Linke Regalkonsole, rechte Regalkonsole und Regalfachboden bilden zusammen ein Regalfach, auf dem Artikel abgestellt und entnommen werden können. Auf die Darstellung der rechten Regalkonsole ist verzichtet. Die rechte Regalkonsole ist spiegelsymmetrisch zur linken Regalkonsole aufgebaut.

Fig. 5 zeigt schematisch drei Regalbereiche 211, 213, 215 auf einem Regalfachboden 200 und entsprechende Komponenten zur Entnahmeüberwachung. Die Bestimmung des Regalbereichs 211, 213, 215 aus dem ein Produkt aus dem Regalfachboden 200 entnommen wurde, erfolgt mittels Schwerpunktermittlung des Regalfachbodens 200.

Der Regalfachboden 200 wird von den vier Wägevorrichtungen 261, 262, 263, 264 schwebend gehaltert. Dabei handelt es sich um die Wägevorrichtungen 102, 104, die in die Regalkonsolen 100 integriert sind. Dabei stützen eine Regalkonsole 100 links des Regalfachbodens 200 und eine Regalkonsole 100 rechts des Regalfachbodens 200 den Regalfachboden 200. Die Wägevorrichtungen 261, 262, 263, 264 stützen mit ihren Krafteinleitungsabschnitten den Regalfachboden 200 an den Enden seiner Streben. Die Wägevorrichtungen 261, 262, 263, 264 bestimmen unabhängig voneinander eine wirkende Gewichtskraft, die durch den Regalfachboden 200 und der in den Regalbereichen 211, 213, 215 abgelegten Artikel entsteht. Dabei wirkt auf jede Wägevorrichtungen 261, 262, 263, 264 anteilig von dem Gesamtgewicht eine einzelne Gewichtskraft. Die Daten aus den Wägevorrichtungen 261, 262, 263, 264 werden an eine Auswerteinheit 265 übermittelt. Die Auswerteinheit 265 bestimmt aus den einzelnen Gewichtsdaten der Wägevorrichtungen 261, 262, 263, 264 Schwerpunktkoordinaten des Regalfachbodens 200. Die Koordinaten im Regalbereich 211, 213, 215 beginnen in einer Ecke bei der Wägevorrichtung 263 mit den Koordinaten (0, 0) und erstrecken sich in waagrechter Richtung X und in senkrechter Richtung Y.

Zur Veranschaulichung der Schwerpunktsermittlung werden den Wägevorrichtungen 261, 262, 263, 264 wie in Fig. 5 dargestellt die entsprechenden Gewichtsdaten W261, W262, W263, W264 zugewiesen.

Die Bildung des Schwerpunkts in X Richtung bestimmt sich wie folgt:

$$(W261 + W262) \; / \; (W261 + W262 + W263 + W264)$$

Die Bildung des Schwerpunkts in Y Richtung bestimmt sich wie folgt:

$$(W261 + W264) \; / \; (W261 + W262 + W263 + W264)$$

Mit einem entsprechenden Normierungsfaktor, der die Größe des Regalfachbodens 200 berücksichtigt, sind Koordinaten in dem Regalbereich 211, 213, 215 bestimmbar, die den Schwerpunktkoordinaten des Regalfachbodens 200 entsprechen. Diese Koordinaten werden in der Auswerteeinheit 265 auf Basis der Daten der Wägevorrichtungen 261, 262, 263, 264 ermittelt. Des Weiteren bildet die Auswerteeinheit 265 ein Gesamtgewicht W261 + W262 + W263 + W264. Die Schwerpunktkoordinaten und das Gesamtgewicht werden von der Auswerteeinheit 265 an eine Steuereinrichtung 241 übermittelt. Das Regal umfasst einen Speicher 244, in dem eine Zuordnung zwischen Schwerpunktkoordinaten und Regalbereichen 211, 213, 215 abgelegt ist. Im Speicher 244 ist des Weiteren für jeden Regalbereich 211, 213, 215 das durchschnittliche Gewicht eines Stücks eines Artikels in diesem Regalbereich 211, 213, 215 abgelegt. Mit dieser Anordnung sind neben den in Fig. 5 gezeigten Regalbereichen 211, 213, 215, die nebeneinander in X Richtung angeordnet sind, auch Regalbereiche zu ermitteln, die in X und Y Richtung in Reihen und Spalten, also in einer Matrix, angeordnet sind.

Fig. 6 zeigt ein Verfahren zur automatischen Entnahmeüberwachung in einem Regal 60, das durch eine Steuereinrichtung 241 ausgeführt wird. In Schritt 230 werden die Regalbereiche 211, 213, 215 des Regalfachbodens 200 mit Artikeln bestückt. Dabei wird im Speicher 244 jedem Regalbereich 211, 213, 215 die Artikel zugewiesen und ein Gewicht pro Stück abgespeichert. Des Weiteren sind im Speicher 244 die X und Y Koordinaten jedes Regalbereichs 211, 213, 215 hinterlegt. Diese müssen nicht bei jedem Befüllen neu hinterlegt werden, da sie sich nicht ändern. Wird jedoch die Größe der Regalbereiche 211, 213, 215 und deren Anordnung durch eine Neuanordnung der Zwischenwände geändert, so muss im Speicher 244 die Zuordnung zwischen X und Y Koordinaten und Regalbereichen 211, 213, 215 aktualisiert werden. Somit ist im Speicher 244 hinterlegt, über welche X und Y Koordinaten sich jeder Regalbereich 211, 213, 215 erstreckt. In Schritt 231 wird mittels einer Auswerteeinheit 265 aus den Gewichtswerten der Wägevorrichtungen 261, 262, 263, 264 ein Ort bestimmt, an dem ein Artikel oder mehrere Artikel entnommen wurden und das Gesamtgewicht der entnommenen Artikel bestimmt. Die Bestimmung in Schritt 231 kann mit drei alternativen Verfahren ausgeführt werden, die mit Bezug zu Fig. 7 bis Fig. 9 im Folgenden beschrieben sind. In Schritt 232 wird mit der Steuereinrichtung 241 aufgrund der Koordinaten des Orts, an dem etwas entnommen wurde und mithilfe der Information aus dem Speicher 244 über die Anordnung der Regalbereiche 211, 213, 215 der zugehörige Regalbereich 211, 213, 215 bestimmt. In Schritt 233 wird aus dem bestimmten Gesamtgewicht der entnommenen Artikel und dem im Speicher 244 dem Regalbereich 211, 213, 215 zugeordneten Gewichtswert für einen Artikel die Anzahl der Artikel bestimmt, die aus dem Regalbereich 211, 213, 215 entnommen wurden. Es wird also die Stückzahl der entnommenen Gegenstände bestimmt. In Schritt 234 wird die Information, welche Artikel und wieviel Artikel entnommen wurden, mit der Kommunikationsvorrichtung 62 des Regals 60 an die Computing Cloud 63 geschickt. Das Verfahren wird dann mit Schritt 231 mit der Entnahme eines weiteren Artikels fortgesetzt.

Fig. 7 zeigt schematisch ein erstes Verfahren zur Bestimmung eines Ortes auf dem Regalfachboden 200, an dem ein Artikel entnommen wurde. In Schritt 271 werden alle Wägevorrichtungen 261, 262, 263, 264 tariert, das heißt der Regalfachboden 200 und alle darauf aufgebrachten Artikel werden so behandelt, als wären sie eine Vorlast für die Wägevorrichtungen 261, 262, 263, 264 und auf Null gesetzt. In Schritt 272 wird von zumindest einer Wägevorrichtung 261, 262, 263, 264 ein neuer Gewichtswert gemessen und von der Auswerteeinrichtung 265 empfangen. In Schritt 273 berechnet die Auswerteeinrichtung 265 aufgrund der aktuellen Gewichtsdaten der Wägevorrichtungen 261, 262, 263, 264 Schwerpunktkoordinaten. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 274 wird dieser Ort und die Änderung des Gewichts an die Steuereinrichtung 241 weitergegeben.

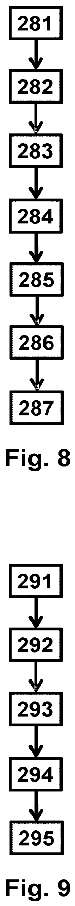

Fig.8 zeigt schematisch ein zweites Verfahren zur Bestimmung eines Ortes auf dem Regalfachboden 200, an dem ein Artikel entnommen wurde. In Schritt 281 werden Schwerpunktkoordinaten vom aktuellen Schwerpunkt des Regalfachbodens 200 inklusiver aller Artikel die darauf aufgelegt sind ermittelt. Dabei handelt es sich um den echten Schwerpunkt. Der Regalfachboden 200 oder zumindest die Artikel, die darauf aufgelegt sind, sind nicht tariert. In Schritt 282 wird von zumindest einer Wägevorrichtungen 261, 262, 263, 264 ein neuer Gewichtswert gemessen und von der Auswerteeinrichtung 265 empfangen. In Schritt 283 werden neue Schwerpunktkoordinaten von der Auswerteeinrichtung 265 aus den neuen Daten der Wägevorrichtungen 261, 262, 263, 264 bestimmt. In Schritt 284 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 285 der Vektor mit Hilfe des Gesamtgewichts des Regalfachbodens und der Änderung des Gesamtgewichts skaliert. Der Ort, an dem ein Produkt aus dem Regalfachboden 200 entnommen wurde ergibt sich in Schritt 286, indem zu den vorhergehenden Schwerpunktkoordinaten der skalierte Vektor addiert wird. In Schritt 287 wird dieser Ort und die Änderung des Gewichts an die an die Steuereinrichtung 241 weitergegeben.

Fig. 9 zeigt schematisch ein drittes Verfahren zur Bestimmung eines Ortes auf dem Regalfachboden 200, an dem ein Artikel hinzugefügt oder entnommen wurde. In Schritt 291 wir durch alle Wägevorrichtungen 261, 262, 263, 264 jeweils ein Gewichtswert bestimmt, der vorhergehende Gewichtswert. In Schritt 292 wird von zumindest einer Wägevorrichtung 261, 262, 263, 264 ein neuer Gewichtswert gemessen und von der Auswerteeinrichtung 265 empfangen. In Schritt 293 berechnet die Auswerteeinheit 265 für jede Wägevorrichtung 261, 262, 263, 264 separat die Änderung des Gewichtswert, das heißt, die Auswerteeinheit bildet die Differenz aus dem neuen Gewichtswert und dem vorhergehenden Gewichtswert. In Schritt 294 berechnet die Auswerteeinrichtung 265 die Schwerpunktkoordinaten der Differenzwerte der vier Wägevorrichtung 261, 262, 263, 264. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem ein Artikel aus dem Regalfachboden 200 entnommen wurde. In Schritt 295 wird dieser Ort und die Änderung des Gewichts an die Steuereinrichtung 241 weitergegeben.

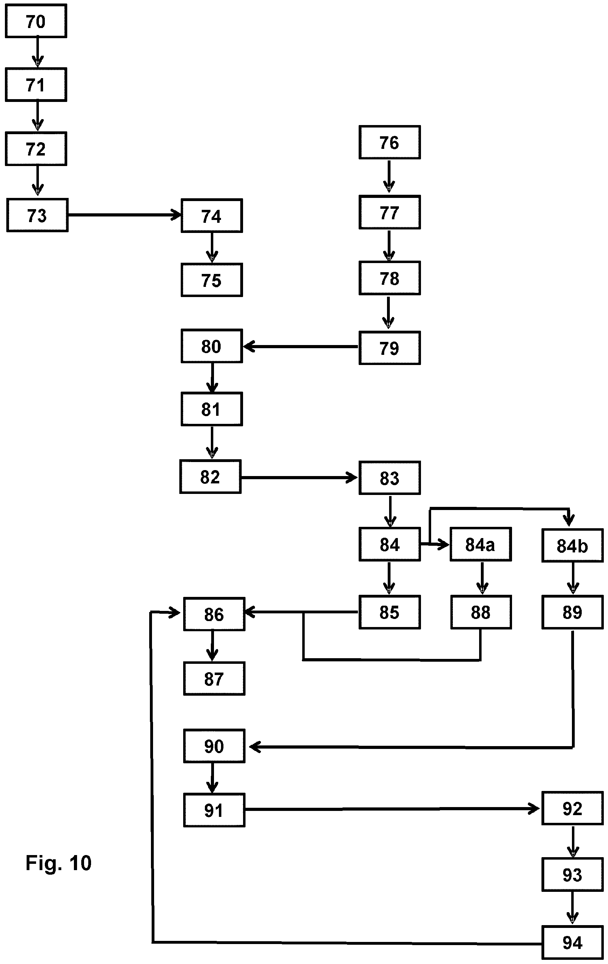

Fig. 10 zeigt schematisch ein Verfahren zum Selbst-Checkout in einem Ladengeschäft. Die Verfahrensschritte werden teileweise von einem Regal 60 mit automatischer Entnahmeüberwachung, teilweise von einer Verkaufsvorrichtung 10, 40 und teilweise von einer Steuervorrichtung 64 in einer Computing Cloud 63 oder auf einem Server in einem Netzwerk ausgeführt. Die Schritte auf der linken Seite in Fig. 10 werden vom Regal 60 mit automatischer Entnahmeüberwachung ausgeführt, während ein Kunde durch das Ladengeschäft geht und die Artikel für seinen Einkauf zusammenstellt. Die Schritte auf der rechten Seite in Fig. 10 werden von der Verkaufsvorrichtung 10, 40 ausgeführt. Die Schritte in der Mitte in Fig. 10 werden von der Computing Cloud 63 mit einer Steuervorrichtung 64 oder von einem Server, der ebenfalls die Funktion einer Steuervorrichtung wahrnehmen kann, ausgeführt.

Beim Selbst-Checkout in einem Ladengeschäft ist der Kunde dafür zuständig, seine Einkäufe selbst aus den Regalen 60 zu nehmen und zum Abschließen des Einkaufs die Produkte an einer Verkaufsvorrichtung 10, 40 zum Selbst-Checkout selbst zu bezahlen. Das Zusammenstellen der Abrechnung übernimmt die Computing Cloud 63. Das Ladengeschäft kann somit auf Kassenpersonal verzichten. Der Kunde ersetzt das Kassenpersonal und ist somit selbst Bediener der Selbst-Checkout Verkaufsvorrichtung 10, 40.

Der Kunde nimmt einen Einkaufswagen 11 oder Einkaufskorb 41 und geht damit durch das Ladengeschäft und nimmt sich die gewünschten Artikel aus den Regalen 60. In Schritt 70 erkennt ein Näherungssensor 67 die Anwesenheit eines Senders 68, 62 in der Nähe eines Regals 60. In Schritt 71 liest der Näherungssensor 67 die Kundenidentifikationsnummer aus dem Sender 68, 62 aus. Die Sender 68, 62 sind an einem Einkaufswagen 11 oder Einkaufskorb 41 angebracht oder in einen Produktscanner 62 integriert. Werden mehrere Sender 68, 62 in der Nähe des Regals erkannt, so werden mehrere Kundenidentifikationsnummern ausgelesen. Währenddessen überwachen die Regale 60 fortlaufend und automatisch die Entnahme von Artikeln durch die Kunden. Dies findet in einem Schritt 72 statt. Diese Schritte werden von allen Regalen und für alle Sender ausgeführt. Die Entnahmeüberwachung und das Detektieren eines entnommenen Artikels sowie die Bestimmung dessen Artikeldaten erfolgt gemäß der Beschreibung mit Bezug zu Fig. 4 bis Fig. 9. In Schritt 73 sendet das Regal 60 über die Kommunikationsvorrichtung 66 die Artikeldaten der entnommenen Artikel und sowie deren Anzahl und die zugehörige Kundenidentifikationsnummer oder Kundenidentifikationsnummern an die Computing Cloud 63.

Eine Steuervorrichtung 64 in der Computing Cloud 63 empfängt die Artikeldaten, die Kundenidentifikationsnummer oder Kundenidentifikationsnummern und die Anzahl der entnommenen Artikel in Schritt 74. In Schritt 75 fügt die Steuervorrichtung 64 die Artikeldaten und die Anzahl entnommener Artikel und die dazugehörige Kundenidentifikationsnummer oder Kundenidentifikationsnummern einer Liste von zur Bezahlung vorgesehener Artikel zu. Diese Schritte finden fortlaufend für alle Regale statt. Die Liste umfasst somit zu jedem Artikel eine Kundenidentifikationsnummer für den Fall, dass genau ein Sender 68, 62 in der Nähe des Regals bei der Entnahme des Artikels detektiert wurde. Die Liste umfasst einen Artikel ohne Kundenidentifikationsnummer für den Fall, dass kein Sender 68, 62 in der Nähe des Regals bei der Entnahme des Artikels detektiert wurde. Die Liste umfasst einen Artikel mit zwei oder mehreren Kundenidentifikationsnummer für den Fall, dass zwei oder mehrere Sender 68, 62 gleichzeitig in der Nähe des Regals bei der Entnahme des Artikels detektiert wurden.

In Schritt 76 erkennt die Verkaufsvorrichtung 10, 40 das Auflegen eines Einkaufswagens 11 oder Einkaufskorbes 41 auf der Auflageplatte 13, 43 durch die Veränderung eines, mit einer Wägezelle 18, 48 und einer dazugehörigen Gewichtsverarbeitungsvorrichtung 24, 54, gemessenen Gewichtswertes und bestimmt das Gewicht des Einkaufswagens 11 oder des Einkaufskorbes 41 mitsamt dessen Inhalt. Dabei wird das Leergewicht des Einkaufswagens 41 oder des Einkaufskorbes 41 vom gemessenen Gewicht abgezogen, so dass ausschließlich das Gewicht der Artikel in dem Einkaufswagen 11 oder in dem Einkaufskorb 41 bestimmt werden. In Schritt 77 liest die Verkaufsvorrichtung 10, 40 die Kundenidentifikationsnummer aus dem Sender 68 am Einkaufswagen 11 oder Einkaufskorb 41 oder aus dem Produktscanner 62 des Kunden aus. In Schritt 78 wird durch die Kamera 14, 44 der Verkaufsvorrichtung 10, 40 mindestens ein Bild einer offenen Seite des Einkaufswagens 11 oder des Einkaufskorbes gemacht 41. In Schritt 79 werden die Bilddaten und Gewichtsdaten und die Kundenidentifikationsnummer über ein Netzwerk 25, 55 von der Verkaufsvorrichtung 10, 40 an die Computing Cloud 63 geschickt.

In Schritt 80 empfängt die Computing Cloud 63 die Kundenidentifikationsnummer, die Bilddaten und die Gewichtsdaten von der Verkaufsvorrichtung 10, 40. Die Steuervorrichtung 64 der Computing Cloud 63 umfasst eine Auswerteeinrichtung, die aufgrund der Kundenidentifikationsnummer, der Gewichtsdaten und der Bilddaten in Schritt 81 alle Artikel, die sich in dem betreffenden Einkaufswagen 11 oder Einkaufskorb 41 befinden, detektiert. Dabei legt die Auswerteeinrichtung die Bilddaten zugrunde und führt ein Objekterkennungsverfahren durch. Um die Zuverlässigkeit und Genauigkeit des Objekterkennungsverfahrens zu erhöhen, wird die Liste der zur Bezahlung vorgesehenen Artikel zugrunde gelegt. Die Auswerteeinrichtung lässt nur die Erkennung von Artikeln zu, die auf der Liste der zur Bezahlung vorgesehenen Artikel stehen. So erhöht sich die Wahrscheinlichkeit der korrekten Objekterkennung, da Artikel, die nicht auf der Liste der zur Bezahlung vorgesehen Artikel vorhanden sind und somit auch nicht in dem Einkaufswagen oder Einkaufskorb sein können, nicht als mögliche Lösungen des Objekterkennungsverfahrens erlaubt sind. Alle Artikel, die in der Liste der zur Bezahlung vorgesehenen Artikel mit der, gemeinsam mit den Bilddaten und Gewichtsdaten empfangenen Kundenidentifikationsnummer gespeichert sind und keine weitere Kundenidentifikationsnummer aufweisen, sind mit sehr hoher Wahrscheinlichkeit in dem Einkaufswagen 11 oder Einkaufskorb 41. Alle Artikel, die in der Liste der zur Bezahlung vorgesehenen Artikel mit einer anderen als der, gemeinsam mit den Bilddaten und Gewichtsdaten empfangenen Kundenidentifikationsnummer gespeichert sind, sind mit sehr hoher Wahrscheinlichkeit nicht in dem Einkaufswagen 11 oder Einkaufskorb 41. Alle Artikel, die keine Kundenidentifikationsnummer aufweisen oder neben der, gemeinsam mit den Bilddaten und Gewichtsdaten empfangenen Kundenidentifikationsnummer noch mindestens eine weitere Kundenidentifikationsnummer aufweisen, sind mit einer mittleren Wahrscheinlichkeit im Einkaufswagen 11 oder Einkaufskorb 41. Des Weiteren lässt die Auswerteeinrichtung nur Lösungen zu, bei dem ein Set aus Artikeln erkannt wird, deren summierte Einzelgewichte dem von der Verkaufsvorrichtung 10, 40 übermittelten gemessenen Gewicht der Artikel im Einkaufswagen 11 oder Einkaufskorb 41 entspricht. Dabei ist es dem Fachmann bewusst, dass das Verfahren zur Objekterkennung auf Basis von Wahrscheinlichkeitsrechnung erfolgt und die Gewichtsdaten dazu dienen, in der Auswerteeinrichtung die Wahrscheinlichkeit für die eine oder die andere Lösung zu erhöhen. Artikel, die sich nicht auf der Liste der zur Bezahlung vorgesehener Artikel befinden, werden von der Auswerteeinrichtung mit einer Wahrscheinlichkeit von Null oder einer sehr geringen Wahrscheinlichkeit für das Vorhandensein im Einkaufswagen 11 oder Einkaufskorb 41 bewertet. In Schritt 82 sendet die Computing Cloud 63 die erkannten Artikel an die Verkaufsvorrichtung 10, 40.

In Schritt 83 empfängt die Verkaufsvorrichtung 10, 40 die erkannten Artikel von der Computing Cloud 63. In Schritt 84 startet die Verkaufsvorrichtung 10, 40 über die Ein-/ Ausgabeeinheit 20, 50 und die Bezahleinheit 30, 50a den Bezahlvorgang mit dem Kunden. Hat der Kunde die Artikel bezahlt, so kann er das Ladengeschäft verlassen. Die Verkaufsvorrichtung 10, 40 sendet dann in Schritt 85 eine Bestätigung an die Computing Cloud 63. Die Computing Cloud 63 empfängt in Schritt 86 die Bestätigung über den Bezahlvorgang der Artikel und löscht die bezahlten Artikel in Schritt 87 mit der Steuervorrichtung von der Liste der zu bezahlenden Artikel.

Stellt der Kunde in Schritt 84 fest, dass die ihm zur Bezahlung vorgeschlagenen Artikel nicht stimmen, so kann er in einem alternativen Schritt 84a oder 84b über die Ein-/Ausgabeeinheit 20, 50 dies in die Verkaufseinrichtung 10, 20 eingeben.

Wird dem Kunden beim Bezahlvorgang mindestens ein Artikel zu viel angezeigt, den der Kunde nicht kaufen möchte, wobei die anderen Artikel korrekt sind, so kann der Kunde über die Ein-/Ausgabeeinheit 30, 50 diesen mindestens einen Artikel in Schritt 84a manuell löschen. Die Verkaufseinrichtung 10, 20 sendet dann in einem Schritt 88 eine korrigierte Liste mit bezahlten Artikeln an die Computing Cloud 63 und das Verfahren wird mit Schritt 86 fortgesetzt.

Wird dem Kunden hingegen beim Bezahlvorgang ein Artikel zu wenig oder ein falscher Artikel angezeigt, so kann der Kunde im Schritt 84b dies in die Ein-/Ausgabeeinheit 30, 50 der Verkaufsvorrichtung 10, 40 eingeben. Im Schritt 89 sendet die Verkaufsvorrichtung 10, 40 eine Anfrage nach Artikelvorschlägen an die Computing Cloud 63. In Schritt 90 empfängt die Computing Cloud 63 die Anfrage nach Artikelvorschlägen. In Schritt 91 sendet die Computing Cloud 63 von der Liste der zur Bezahlung vorgesehenen Artikel die Artikel, zu denen keine Kundenidentifikationsnummer gespeichert ist und/oder die Artikel, zu denen neben der in Schritt 77 ausgelesenen Kundenidentifikationsnummer noch eine weitere Kundenidentifikationsnummer gespeichert ist. Diese zwei Kategorien von Artikeln entsprechen den Artikeln, deren Zuordnung zu einem Einkaufswagen 11 oder einem Einkaufskorb 41 die meisten Ungenauigkeiten aufweist. Es ist wahrscheinlich, dass ein Fehler bei der Zuordnung der Artikel zum Einkaufswagen 11 oder Einkaufskorb 41 bei einem dieser Artikel gemacht wurde. In Schritt 92 empfängt die Verkaufsvorrichtung die Artikel. Im Schritt 93 werden von der Verkaufsvorrichtung 10, 40 über die Ein-/Ausgabevorrichtung 20, 50 dem Kunden diese Artikel zur Auswahl angeboten. So kann der Kunde die fehlenden oder falschen Artikel auswählen oder austauschen und die korrekten Artikel für den Bezahlvorgang in die Verkaufsvorrichtung 10, 40 eingeben. In Schritt 93 führt der Kunde den Bezahlvorgang für seinen Einkauf aus. In Schritt 94 sendet die Verkaufsvorrichtung 10, 40 die Liste der bezahlten Artikel an die Computing Cloud. Das Verfahren geht dann mit Schritt 87 in der Computing Cloud 63 weiter.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Verfahren zum Betrieb einer Verkaufsvorrichtung für Waren, insbesondere Einzelhandelswaren, wobei dass das Verfahren die Schritte umfasst:

   - detektieren, mit einem Regal mit automatischer Entnahmeüberwachung, eines entnommenen Artikels und Bestimmung von dessen Artikeldaten,
   - auslesen einer Kundenidentifikationsnummer eines Kunden in der Nähe des Regals, aus dem ein Artikel entnommen wurde,
   - empfangen, durch eine Steuervorrichtung, der Artikeldaten des entnommenen Artikels und der Kundenidentifikationsnummer,
   - hinzufügen, mit der Steuervorrichtung, der Artikeldaten des entnommenen Artikels und der Kundenidentifikationsnummer zu einer Liste von zur Bezahlung vorgesehener Artikel,
   - detektieren, mit einer Detektionsvorrichtung, von Artikeln, für die ein Bezahlvorgang ausgeführt werden soll, wobei die Detektionsvorrichtung mindestens einen Sensor und eine Auswerteeinrichtung umfasst und zur Detektion der Artikel der Auswerteeinrichtung mindestens Daten des Sensors und die Liste der zur Bezahlung vorgesehenen Artikel als Eingangsgrößen zur Verfügung gestellt werden.

2. Verfahren zum Betrieb einer Verkaufsvorrichtung nach Anspruch 1, wobei das Auslesen einer Kundenidentifikationsnummer umfasst:

   - detektieren, mit einem Näherungssensor, von einem Einkaufswagen oder Einkaufskorb, wobei der Einkaufswagen oder Einkaufskorb einen Sender umfasst, der vom Näherungssensor auslesbar ist.

3. Verfahren zum Betrieb einer Verkaufsvorrichtung nach Anspruch 1 oder 2, wobei das Auslesen einer Kundenidentifikationsnummer umfasst:

   - detektieren, mit einem Näherungssensor, von einem Produktscanner, wobei der Produktscanner einen Sender umfasst, der vom Näherungssensor auslesbar ist.

4. Verfahren zum Betrieb einer Verkaufsvorrichtung nach Anspruch 2 oder 3, wobei mehrere Kundenidentifikationsnummern vom Regal gesendet und durch die Steuervorrichtung empfangen werden, wenn der Näherungssensor mehrere Einkaufswagen, Einkaufskörbe oder Produktscanner erkennt und die Steuervorrichtung mindestens zwei, insbesondere alle Kundenidentifikationsnummern mit den Artikeldaten des entnommenen Artikels in der Liste der zur Bezahlung vorgesehenen Artikel speichert.

5. Verfahren zum Betrieb einer Verkaufsvorrichtung nach Anspruch 4, wobei der Näherungssensor die Distanz der einzelnen Einkaufswagen, Einkaufskörbe oder Produktscanner zum Näherungssensor erkennt und bei der Verknüpfung der Kundenidentifikationsnummer mit dem Artikel die Distanz zum Sender der jeweiligen Kundenidentifikationsnummer mit in der Liste der zur Bezahlung vorgesehenen Artikel gespeichert wird.

6. Verfahren zum Betrieb einer Verkaufsvorrichtung nach einem der Ansprüche 2 bis 5, wobei der Näherungssensor die Zeitdauer erfasst, die ein Einkaufswagen, Einkaufskorb oder Produktscanner in der Nähe des Näherungssensor ist.

7. Verfahren zum Betrieb einer Verkaufsvorrichtung nach einem der Ansprüche 1 bis 6, wobei der mindestens eine Sensor der Detektionsvorrichtung mindestens eine Kamera, insbesondere mindestens eine CCD Kamera, ist und die Daten des mindestens einen Sensors Bilddaten sind und/oder mindestens eine Wägezelle ist und die Daten des mindestens einen Sensors Gewichtsdaten sind.

8. Verfahren zum Betrieb einer Verkaufsvorrichtung nach einem der Ansprüche 1 bis 7, wobei der Schritt des Detektierens von Artikeln, für die ein Bezahlvorgang ausgeführt werden soll, den Schritt umfasst:

   - anwenden eines Verfahrens zur Objekterkennung in der Auswerteeinrichtung, wobei das Verfahren zur Objekterkennung in den Daten des mindestens einen Sensors objektbeschreibende Attribute erkennt und diese mit objektbeschreibenden Attributen von Artikeln vergleicht, die in der Liste der zur Bezahlung vorgesehenen Artikel sind.

9. Verfahren zum Betrieb einer Verkaufsvorrichtung nach Anspruch 8, wobei für das Verfahren zur Objekterkennung die Wahrscheinlichkeit für einen Artikel auf der Liste der zur Bezahlung vorgesehenen Artikel in Abhängigkeit der Distanz des Senders zum Näherungssensor und/oder in Abhängigkeit zu der Dauer, während der der Sender in der Nähe des Näherungssensor war, anpasst.

10. Verfahren zum Betrieb einer Verkaufsvorrichtung nach einem der Ansprüche 1 bis 9, wobei das Verfahren zum Detektieren von Artikeln, für die ein Bezahlvorgang ausgeführt werden soll, nur Artikel erkennt, die zur Liste der zur Bezahlung vorgesehenen Artikel gehören.

11. Verfahren zum Betrieb einer Verkaufsvorrichtung nach einem der Ansprüche 1 bis 10, wobei mindestens ein Regal mit automatischer Entnahmeüberwachung zum Detektieren des entnommenen Artikels folgende Schritte ausführt:

   - empfangen eines Signals von mindestens zwei, vorzugsweise drei oder vier Wägezellen, die in den Ecken eines starren Körpers, der einen Auslagebereich mit mindestens zwei Produktbereichen bildet, angeordnet sind, wobei die Signale den Gewichtskräften im Bereich der Ecken des starren Körpers entsprechen,
   - ermitteln, mit einer Auswerteeinheit, von Schwerpunktkoordinaten und einer Gesamtgewichtskraft aus den empfangenen Signalen,
   - empfangen eines Signals das einer neuen Gewichtskraft entspricht von mindestens einer Wägezelle und ermitteln mit der Auswerteeinheit neuer Schwerpunktkoordinaten aus den von den Wägezellen aktuell empfangenen Daten,
   - ermitteln (63) eines Produktbereichs und eines Gewichts der aus dem Produktbereich entnommenen Artikel, und
   - bestimmen der Artikeldaten des aus dem Regal entnommenen Artikels aufgrund des ermittelten Produktbereichs und bestimmen der Anzahl der entnommenen Artikel aufgrund des dem Produktbereichs entnommenen Gewichts und des spezifischen Gewichts des Artikels.

12. Verfahren zum Betrieb einer Verkaufsvorrichtung nach einem der Ansprüche 8 bis 11, wobei ein Verfahren zur Objekterkennung ein Verfahren ist, das einen gemessenen Gewichtswert mit dem Gewicht mindestens eines Artikel auf der Liste der zur Bezahlung vorgesehenen Artikel vergleicht.

13. Verfahren zum Betrieb einer Verkaufsvorrichtung nach einem der Ansprüche 1 bis 12, wobei das Verfahren folgende Schritte umfasst:

- ermitteln eines Gesamtpreises für einen Bezahlvorgang aus der Summe aller Einzelpreise für die detektierten Artikel, für die ein Bezahlvorgang ausgeführt werden soll, und
- ausführen eines Bezahlvorgang über ein Mobile Payment Verfahren, eine EC-Karte oder Kreditkarte oder über eine Barzahl-Vorgang.

14. Verkaufsvorrichtung zum Selbst-Checkout von Waren in einem Ladengeschäft, insbesondere in einem Supermarkt, wobei das Ladengeschäft mindestens ein Regal mit automatischer Entnahmeüberwachung und mit einem Näherungssensor und ein Netzwerk zum Austausch von Daten umfasst, wobei die Verkaufsvorrichtung eine Steuervorrichtung zur Steuerung der Verkaufsvorrichtung, eine Kommunikationseinheit zum Empfangen von Daten aus dem Netzwerk sowie eine Datenbank zum Speichern von Artikeldaten und zu den Artikeln dazugehörigen objektbeschreibenden Attributen umfasst, wobei die Steuervorrichtung ausgelegt ist, über das Netzwerk von dem mindestens einen Regal mit automatischer Entnahmeüberwachung Artikeldaten von entnommenen Artikeln und eine zu den Artikeldaten zugehörige, durch den Näherungssensor ausgelesene Kundenidentifikationsnummer und vorzugsweise zugehörige Entfernung zu empfangen und die Steuervorrichtung daraus eine Liste der zur Bezahlung vorgesehenen Artikel ermittelt, und wobei die Verkaufsvorrichtung eine Detektionsvorrichtung mit mindestens einem Sensor und eine Auswerteeinrichtung umfasst, wobei die Detektionsvorrichtung mit der Auswerteeinrichtung auf Grundlage der Daten des Sensors und der Liste der zur Bezahlung vorgesehenen Artikel bestimmt, für welche Artikel ein Bezahlvorgang ausgeführt werden soll.

15. Verkaufsvorrichtung zum Selbst-Checkout von Waren nach Anspruch 14, wobei die Auswerteeinrichtung aus den Daten des mindestens einen Sensors objektbeschreibende Attribute erkennt und diese mit objektbeschreibenden Attributen von Artikeln vergleicht, die in der Liste der zur Bezahlung vorgesehenen Artikel sind.

16. Verkaufsvorrichtung zum Selbst-Checkout von Waren nach Anspruch 14 oder 15, wobei die Verkaufsvorrichtung ein Teil eines Verbundes von mehreren Verkaufsvorrichtungen in dem Ladengeschäft ist und die Datenbank eine gemeinsame Datenbank für alle Verkaufsvorrichtungen des Verbundes von mehreren Verkaufsvorrichtungen ist und die Verkaufsvorrichtungen über ein Netzwerk mit der Datenbank verbunden sind.

17. Verkaufsvorrichtung zum Selbst-Checkout von Waren nach einem der Ansprüche 14 bis 16, wobei sich zumindest Teile der Detektionsvorrichtung, der Steuervorrichtung, der Auswerteeinrichtung und/oder der Datenbank außerhalb des Ladengeschäfts, insbesondere auf einem Server oder in einem Cloud-Netzwerk befinden und die Verkaufsvorrichtung über ein Netzwerk auf diese Teile der Detektionsvorrichtung, der Steuervorrichtung, der Auswerteeinrichtung und/oder der Datenbank zugreift.

**Fig. 1**

Fig. 2

Fig. 3

**Fig. 4**

**Fig. 5**

Fig. 6

Fig. 7

281

282

283

284

285

286

287

Fig. 8

291

292

293

294

295

Fig. 9

Fig. 10

**Europäisches Patentamt**
**European Patent Office**
**Office européen des brevets**

# EUROPÄISCHER RECHERCHENBERICHT

Nummer der Anmeldung

EP 20 21 7325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/026593 A1 (SAWADA TAKAYUKI [JP]) 24. Januar 2019 (2019-01-24) * Zusammenfassung; Abbildungen * * Absätze [0080] - [0220] * ----- | 1-17 | INV. G07G1/00 G07G1/14 G06Q20/20 G06Q20/18 |
| X | US 2013/284806 A1 (MARGALIT RAN [US]) 31. Oktober 2013 (2013-10-31) * Zusammenfassung; Abbildungen * * Absätze [0044] - [0052], [0062] - [0077] * ----- | 1-17 | G01G19/414 A47F3/00 A47F9/04 |
| A | US 2018/373928 A1 (GLASER WILLIAM [US] ET AL) 27. Dezember 2018 (2018-12-27) * Zusammenfassung; Abbildungen * * Absätze [0086] - [0124] * ----- | 1-17 | |
| A | US 2018/240180 A1 (GLASER WILLIAM [US] ET AL) 23. August 2018 (2018-08-23) * Zusammenfassung; Abbildungen * * Absätze [0061] - [0065], [0105] - [0114] * ----- | 1-17 | |
| | | | RECHERCHIERTE SACHGEBIETE (IPC) |
| A | US 10 520 353 B1 (SHI QICAI [US] ET AL) 31. Dezember 2019 (2019-12-31) * Zusammenfassung; Abbildungen * * Spalte 17, Zeile 57 - Spalte 19, Zeile 32 * * Spalte 29, Zeile 57 - Spalte 30, Zeile 17 * ----- | 1-17 | G07G G06Q G01G A47F |
| A | EP 3 654 305 A1 (BIZERBA SE & CO KG [DE]) 20. Mai 2020 (2020-05-20) * Zusammenfassung; Abbildungen * * Absätze [0023] - [0032] * ----- | 1-17 | |

Der vorliegende Recherchenbericht wurde für alle Patentansprüche erstellt

| Recherchenort | Abschlußdatum der Recherche | Prüfer |
|---|---|---|
| Den Haag | 1. Juni 2021 | Schöndienst, Thilo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 21 7325

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2021

| Im Recherchenbericht angeführtes Patentdokument | Datum der Veröffentlichung | Mitglied(er) der Patentfamilie | Datum der Veröffentlichung |
|---|---|---|---|
| US 2019026593 A1 | 24-01-2019 | CN 109285019 A<br>EP 3432247 A1<br>JP 2019021256 A<br>US 2019026593 A1 | 29-01-2019<br>23-01-2019<br>07-02-2019<br>24-01-2019 |
| US 2013284806 A1 | 31-10-2013 | US 2013284806 A1<br>WO 2013059716 A2 | 31-10-2013<br>25-04-2013 |
| US 2018373928 A1 | 27-12-2018 | AU 2018289552 A1<br>BR 112019027120 A2<br>EP 3635623 A1<br>US 2018373928 A1<br>US 2019005479 A1<br>US 2020394636 A1<br>WO 2018237210 A1 | 16-01-2020<br>07-07-2020<br>15-04-2020<br>27-12-2018<br>03-01-2019<br>17-12-2020<br>27-12-2018 |
| US 2018240180 A1 | 23-08-2018 | KEINE | |
| US 10520353 B1 | 31-12-2019 | KEINE | |
| EP 3654305 A1 | 20-05-2020 | EP 3654305 A1<br>US 2020151696 A1 | 20-05-2020<br>14-05-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1717772 A1
- EP 3620760 B1

- EP 19220148